# EUROPÄISCHE PATENTSCHRIFT

(11) **EP 1 439 218 B1**
(45) Veröffentlichungstag und Bekanntmachung des Hinweises auf die Patenterteilung: **28.07.2004**
(21) Anmeldenummer: 03001183.7
(22) Anmeldetag: 21.01.2003
(51) Int. Cl.: C11B 9/02, B01D 1/00

(54) **Lösungsmittelfreie Mikrowellen-Extraktion von flüchtigen Naturstoffen**
Solvent-free microwave extraction of volatile natural compounds
Extraction par microondes sans utilisation de solvant, de composés naturels volatils

(43) Veröffentlichungstag der Anmeldung: 21.07.2004
(73) Patentinhaber: Milestone S.r.l., 24010 Sorisole (BG) (IT); Université de la Réunion Laboratoire de Chimie des Substances Naturelles et des Sciences des Aliments, 97715 Saint-Denis Messag cédex 9, La Réunion France DOM (RE)
(72) Erfinder: Chemat, Farid, c/o Milestone S.r.l., 24010 Sorisole (BG) (IT); Smadja, Jacqueline, c/o Milestone S.r.l., 24010 Sorisole (BG) (IT); Lucchesi, Marie, c/o Milestone S.r.l., 24010 Sorisole (BG) (IT)
(74) Vertreter: Rupp, Christian, Dipl.Phys.

(56) Entgegenhaltungen:
- EP-A- 0 398 798
- WO-A-94/26853
- FR-A- 2 787 347
- US-A- 5 884 417

## Beschreibung

Die vorliegende Erfindung bezieht sich auf ein Verfahren zur Extraktion von flüchtigen Naturstoffen, beispielsweise eines pflanzlichen Öls, aus biologischem Material, beispielsweise aus Pflanzen, wobei das biologische Material Wasser enthält. Die Extraktion wird ohne Zusatz eines Lösungsmittels durchgeführt. Zur Erwärmung wird Mikrowellenbestrahlung eingesetzt. Außerdem bezieht sich die vorliegende Erfindung auf eine Vorrichtung zur Durchführung eines solchen Extraktionsverfahrens.

Ein Vorteil von lösungsmittelfreien Extraktionsverfahren ist allgemein darin zu sehen, dass es nach dem Extraktionsprozess nicht notwendig ist, den extrahierten Stoff von dem Lösungsmittel zu trennen, um das konzentrierte Extrakt zu erhalten.

Bei der Hydro-Destillation wird das zu extrahierende Material, also beispielsweise Pflanzen in Wasser getaucht und anschließend das Wasser durch Wärmezufuhr zum Sieden gebracht. Dies erfordert Zufuhr von vergleichsweise hohen Energiemengen. Eine andere Möglichkeit stellt die Wasserdampfdestillation dar, bei der Wasserdampf direkt an das zu extrahierende Material geleitet wird.

Verfahren zur Extraktion von Naturstoffen, die ohne Zusatz von Lösungsmitteln durchgeführt werden, sind bekannt. Beispielsweise wird in der EP 0 698 076 B1 ein Verfahren offenbart, bei dem biologisches Material mittels Mikrowellenbestrahlung erwärmt wird. Dies führt zur Verdunstung des in den pflanzlichen Zellen befindlichen Wassers und in der Folge zum Aufbrechen von Zellstrukturen, so dass bei diesem Prozess neben Wasserdampf auch in den Pflanzen befindliches Öl frei wird.

Der Druck in der Mikrowellenkammer wird dabei zeitweilig signifikant vermindert, um den Vorgang der Freisetzung von Zelleninhalt nach außen zu begünstigen. Die Verdunstung von pflanzlichem Wasser führt dabei zu einem Absinken der Temperatur. Dies wird durch eine weitere Erhitzung teilweise kompensiert. Die vorgeschlagene Vorrichtung setzt indessen vergleichsweise hohen apparativen Aufwand voraus, da die Mikrowellenkammer als Druckkammer ausgestaltet sein muss.

Ein weiteres lösungsmittelfreies Extraktionsverfahren ist aus dem Artikel "Microwave Oven Extraction of an Essential Oil" von A.A. Craveiro et al. aus der Zeitschrift "Flavour and Fragrance Journal", Vol. 4., Seiten 43 bis 44, 1989 bekannt. Auch bei diesem Verfahren wird biologisches Material durch Mikrowellenbestrahlung erhitzt. Die dabei entstehenden Dämpfe enthalten pflanzliches Öl und werden aus dem Mikrowellenofen abgeführt und gekühlt, so dass es zur Kondensation des Öls kommt.

Gemäß diesem Verfahren wird Luft von außerhalb des Mikrowellenofens in den Innenraum des Mikrowellenofens gepumpt. Dadurch wird ein Luftstrom hervorgerufen, mit dem das freigesetzte Öl abtransportiert wird. Durch das Zuführen von Luft mittels Luftpumpe von außerhalb des Mikrowellenofens besteht die prinzipielle Gefahr des Eintrags von unerwünschten Stoffen, die die Reinheit des extrahierten Öls beeinträchtigen.

Der Erfindung liegt die Aufgabe zugrunde, ein lösungsmittelfreies, effizientes Extraktionsverfahren vorzuschlagen, das insbesondere die oben genannten Nachteile des Standes der Technik vermeidet. Das Verfahren soll weiterhin besonders hohen Reinheitsansprüchen gerecht werden können. Ein weiteres Ziel der Erfindung ist es, eine entsprechende Vorrichtung vorzuschlagen, die vergleichsweise einfach hergestellt werden kann.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird ein Verfahren zur Extraktion eines flüchtigen Naturstoffes aus biologischem Material vorgeschlagen. Das biologische Material enthält dabei pflanzliches und/oder hinzugefügtes Wasser, das im Kreislauf geführt wird.

Das erfindungsgemäße Verfahren weist folgende Schritte auf: Zunächst wird das biologische Material, beispielsweise Pflanzen, in einen Mikrowellenraum, also beispielsweise einen Mikrowellenofen, eingebracht. Das biologische Material muss dabei nicht besonders fein zerkleinert sein. Beispielsweise können auch Blätter in ganzen Stücken verwendet werden.

Ein Lösungsmittel wird nicht zugesetzt.

Sodann wird das biologische Material mit Mikrowellen bestrahlt. Dies führt zur Erwärmung des in den Pflanzen befindlichen Wassers bis zur Verdampfung und in der Folge zum Bersten der Wände pflanzlicher Zellen, die Wasser enthalten. Dadurch kommt es zusammen mit dem Verdampfen des Wassers zur Freisetzung von flüchtigen Naturstoffen, die sich in dem biologischen Material befinden.

In einem weiteren Schritt werden die Dämpfe, die insbesondere pflanzliches Wasser und den/die zu extrahierenden Naturstoff(e) enthalten, unter Nutzung der aufgrund der Erwärmung natürlicherweise entstehenden Konvektion aus dem Mikrowellenraum nach oben hin abgeleitet und in einen Kondensationsraum weitergeleitet. In diesem Kondensationsraum erfolgt eine Abkühlung der Dämpfe bis zur Kondensation des freigesetzten Naturstoffes. Der auf diese Weise verflüssigte Naturstoff wird dann schließlich aus dem Kondensationsraum abtransportiert. Sämtliche Transportvorgänge erfolgen aufgrund eines natürlichen Kreislaufs ohne mechanische Hilfen (Pumpen etc.).

Vorteilhaft sind der Mikrowellenraum und der Kondensationsraum miteinander dicht verbunden und bilden Teile eines nach außen hin abgeschlossenen Systems. Auf diese Weise kann der Eintrag unerwünschter Stoffe in das System verhindert werden. Dadurch kann in schonender Weise höchsten Reinheitsansprüchen genüge geleistet werden.

Bei dem flüchtigen Naturstoff kann es sich beispielsweise um pflanzliches Öl oder andere Essenzen handeln.

Vorteilhaft wird bei der Bestrahlung des biologischen Materials mit Mikrowellen die Temperatur in dem Mikrowellenraum gemessen und in Abhängigkeit davon die Mikrowellenstrahlung in an sich bekannter Weise reguliert, so dass in dem Mikrowellenraum eine Temperatur unter 100°C gehalten wird. Vorzugsweise ist ein Temperaturbereich von etwa 80°C bis 90°C einzuhalten.

Wird das biologische Material während der Bestrahlung gerührt (Magnetrührer etc.), so kann dadurch eine Expositionsverbesserung und eine besonders gleichmäßige Bestrahlung bewirkt werden.

Eine Durchmischung und damit eine Expositionsverbesserung kann auch durch einen rotierbaren, schräg angeordneten Aufnahmebehälter für das biologische Material erzielt werden. Auch eine besonders gleichförmige Bestrahlung läßt sich damit erreichen.

Der Kondensationsraum, der sich oberhalb des Mikrowellenraumes befindet, ist vorzugsweise von letzterem durch eine Trennwand abgetrennt, die sich nach oben hin verjüngt und dabei im oberen Bereich eine Öffnung aufweist, durch welche die durch Konvektion sich bewegende Luft hindurchtreten kann. Auf diese Weise werden in diesem Bereich die Dämpfe thermisch an einem Zurückweichen in Richtung Mikrowellenraum gehindert.

In einem Übergangsbereich zwischen dem Mikrowellenraum und dem Kondensationsraum kann vorzugsweise zusätzlich Wärme zugeführt werden, um auf diese Weise die Konvektionsbewegung der Luft zu unterstützen und eine Kondensation in diesem Bereich zu verhindern.

Die Kühlung in dem Kondensationsraum erfolgt vorzugsweise durch eine Wandkühlung. Dadurch kann eine Tröpfchenbildung des Naturstoffes an der Wand des Kondensationsraumes erzielt werden, was in der Folge zur leichteren Abtrennung des kondensierten Materials aus dem Kondensationsraum führt.

Der Abtransport des freigesetzten, kondensierten Naturstoffes aus dem Kondensationsraum kann vorteilhaft durch einen Kanal erfolgen, der im Bodenbereich aus dem Kondensationsraum führt, so dass Flüssigkeit der Schwerkraft folgend abgeleitet wird. Ein mit dem Kanal verbundenes Aufnahmegefäß kann der Aufnahme des kondensierten Naturstoffes dienen.

Um ein vorzeitiges Austrocknen des bestrahlten biologischen Materials zu verhindern, wird vorteilhaft in dem Kondensationsraum kondensiertes Wasser wieder dem Mikrowellenraum zugeführt. Hierzu kann beispielsweise eine mit dem Aufnahmegefäß verbundene Überlaufvorrichtung dienen, mit der Wasser von dem kondensierten Naturstoff getrennt wird, bevor es dem Mikrowellenraum wieder zugeleitet wird. Auf diese Weise kann das Wasser in dem System im Kreislauf gehalten werden, während sich der Naturstoff in dem Aufnahmegefäß anreichert.

Gemäß einem weiteren Aspekt der Erfindung ist eine Vorrichtung zur Extraktion eines flüchtigen Naturstoffes aus biologischem Material vorgesehen, die folgende Komponenten aufweist: einen Mikrowellenofen mit einem Mikrowellenraum, der zur Aufnahme von biologischem Material vorgesehen ist; weiterhin weist die Vorrichtung einen Kondensationsraum auf, der sich oberhalb des Mikrowellenraumes befindet und mit letzterem durch einen Verbindungskanal verbunden ist. Durch diesen Verbindungskanal kann Luft von dem Mikrowellenraum in den Kondensationsraum gelangen.

Vorteilhaft bilden der Mikrowellenraum und der Kondensationsraum Teile eines geschlossenen Systems. Auf diese Weise kann ein Eintrag von unerwünschten Stoffen verhindert werden.

Weiterhin vorteilhaft weist der Mikrowellenraum Rührmittel auf, die zur Durchmischung des eingebrachten biologischen Materials vorgesehen sind. Eine solche Durchmischung verbessert die Exposition des biologischen Materials und führt zu einer besonders gleichmäßigen Temperaturverteilung bei Mikrowellenbestrahlung.

Eine besonders homogene Temperaturverteilung und eine Verbesserung der Exposition, besonders bei vergleichsweise stark zerkleinertem biologischen Material, bietet auch ein schräg angeordneter, rotierbarer Aufnahmebehälter. Die Rotationsachse kann längs einer Symmetrieachse des Aufnahmebehälters angeordnet sein. Ein Aufnahmebereich für das Material kann dabei vorteilhaft unsymmetrisch zur Rotationsachse ausgebildet sein. Eine vergleichbare Vorrichtung ist als solche bereits aus der deutschen Patentanmeldung 102 27 836.9 bekannt.

Es ist besonders zweckmäßig, wenn der Kondensationsraum von dem Mikrowellenraum durch eine Trennwand abgetrennt ist, die eine sich nach oben hin verjüngende Form aufweist und im oberen Bereich eine Öffnung hat, wobei die Öffnung so dimensioniert ist, dass durch Konvektion bewegte Luft hindurchtreten kann. Durch die sich verjüngende Form werden die Dämpfe, die Naturstoff und pflanzliches Wasser enthalten, an einem Zurückweichen in Richtung Mikrowellenraum gehindert. Die Trennwand ist vorzugsweise aus Kunststoff oder Glas gefertigt.

Als besonders einfache Ausführungsform eignet sich ein Kondensationsraum, der die Form eines vertikal orientierten Zylinders aufweist. Weiterhin vorteilhaft ist der Verbindungskanal ebenfalls in Form eines vertikal orientierten Zylinders gestaltet.

Der Verbindungskanal und der Kondensationsraum können beispielsweise ein- oder zweistückig ausgebildet sein.

Der Verbindungskanal kann eine Heizung, beispielsweise in Form einer elektrischen Wandheizung aufweisen, die dazu geeignet ist, die Konvektionsbewegung der dampfhaltigen Luft in diesem Bereich zu unterstützen und Kondensation in diesem Bereich zu verhindern.

Der Kondensationsraum weist weiterhin vorteilhaft Kühlmittel auf, beispielsweise in Form einer Wandkühlung. Dies ist beispielsweise als Wasserkühlung leicht zu realisieren.

Zum leichten Abtransport des kondensierten Naturstoffes aus dem Kondensationsraum kann der Kondensationsraum in seinem Bodenbereich einen Ablass, beispielsweise in Form eines Kanals aufweisen. Dieser kann mit einem Aufnahmegefäß zur Aufnahme von kondensiertem Naturstoff verbunden sein.

Weiterhin vorteilhaft ist der Ablass oder das Aufnahmegefäß mit einer Überlaufvorrichtung verbunden, die zum Trennen von Naturstoff und Wasser dient. Die Überlaufvorrichtung kann derart gestaltet sein, dass überlaufendes Wasser wiederum dem Mikrowellenraum zugeleitet wird.

Weitere Vorteile und Eigenschaften sollen nunmehr anhand einer detaillierten Beschreibung eines Ausführungsbeispiels und Bezug nehmend auf die Figuren der beigefügten Zeichnungen erläutert werden. Es zeigen
- Fig. 1: einen schematischen Querschnitt durch eine erfindungsgemäße Vorrichtung, und
- Fig. 2: eine schematische Darstellung einer alternativen Ausgestaltungsmöglichkeit des Aufnahmebehälters im Mikrowellenraum.

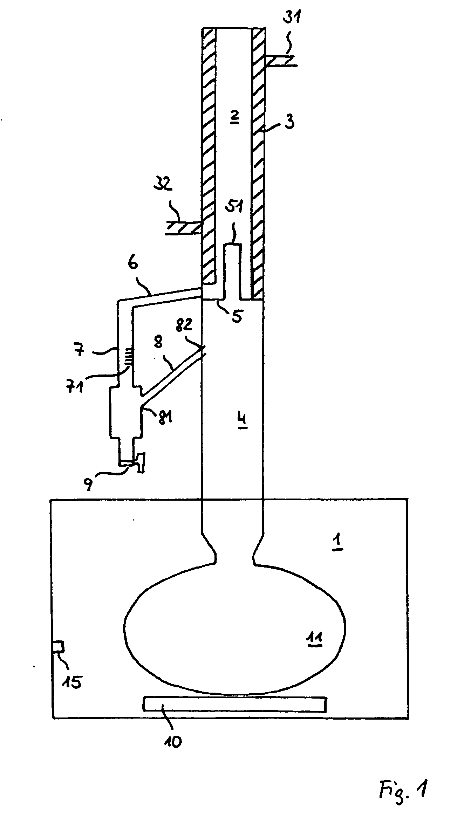

Fig. 1 zeigt eine schematische Darstellung der erfindungsgemäßen Vorrichtung zur Extraktion von flüchtigen Naturstoffen, beispielsweise Ölen, aus biologischem Material wie beispielsweise Pflanzenblättern oder dgl.

In Fig. 1 ist ein Mikrowellenraum 1 dargestellt. Dabei kann es sich beispielsweise um den verschließbaren Innenraum eines Mikrowellenofens handeln. Es ist weiterhin ein Mikrowellengenerator (nicht gezeigt) vorgesehen, durch den das Innere des Mikrowellenraumes 1 mit Mikrowellen bestrahlt werden kann. Zur Aufnahme des biologischen Materials während der Behandlung (Extraktion) dient ein mikrowellentransparenter Aufnahmebehälter 11 im Inneren des Mikrowellenraumes 1.

Der Aufnahmebehälter 11 ist beispielsweise mittels einer Drehscheibe 10 drehbar bezüglich des Mikrowellenraumes 1 gelagert. Durch Drehung des Aufnahmebehälters 11 während der Bestrahlung wird für eine homogene Temperaturverteilung in dem biologischen Material gesorgt.

Weiterhin können Rührmittel (nicht gezeigt) vorgesehen sein, die für eine Durchmischung des biologischen Materials während der Bestrahlung sorgen, um auf diese Weise die Exposition des Materials und die Homogenität der Bestrahlung zu verbessern.

Der Mikrowellenraum 1 weist weiterhin ein Temperaturmessgerät 15 in Form eines Infrarotsensors auf, mit dem während der Bestrahlung kontinuierlich und berührungslos die Temperatur des bestrahlten Materials erfasst werden kann. In Abhängigkeit von der erfassten Temperatur wird die Mikrowellenbestrahlung derart eingestellt, dass sich ein Soll-Temperaturbereich in dem bestrahlten Material einstellt. Dies erfolgt derart, dass nach Erreichen einer Temperatur (Aufheizen) von bspw. circa 80°C bis 90°C die Temperatur in diesem Sollbereich von bspw. circa 80°C bis 90°C und somit unterhalb des Siedepunkts von Wasser bei Normaldruck gehalten wird. Somit wird eine schonende Extraktion gewährleistet.

Nach oben ist der Aufnahmebehälter 11 mit einem zylinderförmigen Verbindungskanal 4 über einen dichten Abschluss verbunden. Der Verbindungskanal 4 ragt aus dem Mikrowellenraum 1 nach oben heraus. Hierfür weist der Mikrowellenraum 1 eine Bohrung auf.

Der Verbindungskanal 4 ist beispielsweise aus Glas gefertigt und von einer elektrischen Wandheizung (nicht gezeigt) umgeben, die ein Kondensieren der in dem Verbindungskanal 4 aufsteigenden Dämpfe in diesem Bereich verhindert.

In seinem oberen Bereich ist der Verbindungskanal 4 durch eine Trennwand 5 begrenzt. Diese Trennwand 5 kann aus Glas oder Kunststoff gefertigt sein. Ihr Boden ist waagrecht angeordnet. In der Mitte des Bodens befindet sich eine beispielsweise kreisrunde zentral angeordnete Bodenöffnung, von der aus die Form der Trennwand 5 in ein vertikal nach oben führendes, zylindrisches Rohr übergeht. In Bezug auf ihre Vertikalschnitte weist die Trennwand 5 gemäß diesem Ausführungsbeispiel also in ihrem Verlauf von unten nach oben eine sprunghafte Durchmesserverringerung auf.

Das durch die Trennwand 5 auf diese Weise geformte Rohr ist oben offen und läßt so die Öffnung 51 entstehen. Das Rohr bildet also eine vertikal aufwärts weisende kanal- oder düsenartige Struktur aus.

Oberhalb des Verbindungskanals 4 schließt sich - durch die Trennwand 5 getrennt - ein Kondensationsraum 2 an. Die düsenartige Struktur der Trennwand 5 stellt somit einen Übergang von dem Verbindungskanal 4 in den Kondensationsraum 2 dar und ragt unter Überlappung mit der gekühlten Wand des Kondensationsraums 2 in letzteren hinein.

Der Kondensationsraum 2 hat gemäß diesem Ausführungsbeispiel ebenfalls die Form eines vertikal orientierten Zylinders, beispielsweise mit demselben Innendurchmesser wie der Verbindungskanal 4 und ist derart ausgebildet, dass die Öffnung 51 der Trennwand 5 symmetrisch zur Mittelachse des Kondensationsraumes 2 liegt. Die Unterkante des Kondensationsraumes 2 befindet sich unterhalb des Niveaus der Öffnung 51 und grenzt unmittelbar an den äußeren Rand der Trennwand 5.

Der Kondensationsraum 2 ist mit einer Wandkühlung 3 ausgestattet, die sich gleichmäßig dem Wandverlauf folgend bis unterhalb der Öffnung 51, beispielsweise bis zur Unterkante des Kondensationsraumes 2 erstreckt. Dabei handelt es sich beispielsweise um eine Wasserkühlung (oder sonstige Fluidkühlung) mit einer Zuleitung 31 für kühles Wasser und einer Ableitung 32 für erwärmtes Wasser. Bezüglich der Öffnung 51 kann der Kondensationsraum

Im Bereich seines tiefsten Punktes weist der Kondensationsraum 2 einen Ablasskanal 6 auf, der zu einem Aufnahmegefäß 7 führt. Der Ablasskanal 6 ist leicht nach unten geneigt, das Aufnahmegefäß 7 hat zylindrische Form und ist vertikal orientiert.

Das Aufnahmegefäß 7 ist mit einer Überlaufvorrichtung verbunden. Diese ist gemäß diesem Ausführungsbeispiel durch ein Rohr 8 realisiert, welches von dem Aufnahmegefäß 7 schräg aufwärts führt und unterhalb der Höhe der Oberkante des Aufnahmegefäßes 7 in den Verbindungskanal 4 mündet. Von dem Niveau der Einmündung 82 des Rohres 8 der Überlaufvorrichtung in den Verbindungskanal 4 aufwärts weist das Aufnahmegefäß 7 eine Pegel-Skalierung 71 auf.

An seinem tiefsten Punkt weist das Aufnahmegerät 7 ein Ablassventil 9 auf.

Im zusammengebauten Zustand bilden der Aufnahmebehälter 11, der Verbindungskanal 4, der Kondensationsraum 2, der Ablasskanal 6, das Aufnahmegefäß 7 und das Überlaufrohr 8 ein abgeschlossenes System. Der Abschluss ist dabei hinreichend dicht, dass ein Eintrag unerwünschter Stoffe während des Verfahrens ausgeschlossen ist.

Zur Durchführung des erfindungsgemäßen Verfahrens wird zunächst biologisches Material in den Aufnahmebehälter 11 gegeben. Dieser wird auf die Drehscheibe 10 in den Mikrowellenraum 1 gestellt und dicht mit dem Verbindungskanal 4 verbunden. Das biologische Material, beispielsweise Pflanzenmaterial enthält in seinen Zellen Wasser. Gegebenenfalls wird vor der Behandlung einmalig Wasser zugegeben, indem beispielsweise das biologische Material vor der Extraktion in Wasser eingeweicht wird. Es wird aber kein Lösungsmittel zugegeben.

Anschließend wird mit der Mikrowellenbestrahlung begonnen. Die Bestrahlung des biologischen Materials in dem Aufnahmebehälter 11 führt durch Absorption der Mikrowellenstrahlung durch die Wasser-Moleküle zur Erwärmung des pflanzlichen Wassers und im Folgenden zum Ansteigen des Drucks innerhalb der das Wasser enthaltenden Zellen. Dies führt im weiteren Verlauf zu einem Bersten der Wände der pflanzlichen Zellen, in die Wasser eingelagert ist, und einem Austritt von Wasserdampf, der andere flüchtige Bestandteile mitreißt.

Mit dem Infrarotsensor 15 wird kontinuierlich oder periodisch die Temperatur des biologischen Materials gemessen. Nach Erreichen einer Temperatur von bspw. etwa 80 °C bis 90 °C wird die Bestrahlung in Abhängigkeit der gemessenen Temperatur derart geregelt, dass die Temperatur in dem genannten Sollwert-Bereich gehalten wird.

Aufgrund der Erwärmung der im Zuger der Bestrahlung in Gasform übergehenden Wassermoleküle in dem Aufnahmebehälter 11 in dem Mikrowellenraum 1 bildet sich selbsttätig eine Konvektions-Aufwärtsbewegung der dampfhaltigen Luft über dem biologischen Material aus. Durch diese Bewegung steigt somit das Dampfgemisch (Wasser und andere föüchtige Substanzen) ohne mechanische Hilfe (Pumpen etc.) nach oben in den Verbindungskanal 4 auf. Die randständige elektrische Heizung des Verbindungskanals 4 heizt während dieses Vorgangs den Verbindungskanal 4 von außen, wodurch die Konvektionsbewegung durch Wärmezufuhr in diesem Bereich weiterhin unterstützt und ein unerwünschtes Kondensieren des Dampfgemisches an den Wänden des Verbindungskanals 4 verhindert wird.

Die aufsteigenden Dämpfe erreichen schließlich den Bereich der Trennwand 5 und werden durch die von der Trennwand 5 geformte kanal- oder düsenartige Struktur durch diese hindurch gezwungen, wobei sich die Strömungsgeschwindigkeit beschleunigt.. Ein Zurückweichen der Dämpfe bzw. ein unerwünschter Rückfluss von Kondensat nach unten wird dadurch verhindert.

Im weiteren Verlauf strömen die Dämpfe durch die Öffnung 51, wodurch sie in den Kondensationsraum 2 gelangen. Dort kommt es aufgrund der Raumerweiterung zu einer Auffächerung des Dampfstroms, wodurch die Dämpfe bevorzugt an die Wände des Kondensationsraumes 2 geleitet werden, dort abkühlen und absinken.

Durch die Wasserkühlung 3 wird eine Abkühlung der dampfhaltigen Luft in dem Kondensationsraum 2 bewirkt, die schliesslich zur Tröpfchenbildung, bevorzugt an der Innenwand des Kondensationsraumes 2 führt.

Die Tröpfchen bestehen dabei teilweise aus Wasser und teilweise aus kondensiertem pflanzlichem Öl. Der Schwerkraft folgend fließen diese Tröpfchen an der Innenwand des Kondensationsraumes 2 nach unten, sammeln sich am Boden des Kondensationsraumes 2 und werden schließlich durch den Ablasskanal 6 und weiter in das Aufnahmegefäß 7 geleitet.

Zunächst ist das Ablassventil 9 geschlossen, so dass sich das Gemisch aus Wasser und Öl im Aufnahmegefäß 7 ansammelt. Die leichtere Ölphase schwimmt dabei obenauf.

Im weiteren Verlauf wird immer mehr Wasser und Öl in kondensierter Form über den Ablasskanal 6 dem Aufnahmegefäß 7 zugeführt, so dass der Flüssigkeitsspiegel dort ansteigt. Nach Erreichen der Mündung 81 des Überlaufrohres 8 in das Aufnahmegefäß 7 steigt der Flüssigkeitsspiegel sowohl in dem Aufnahmegefäß 7 als auch in dem Überlaufrohr 8 weiter an (Prinzip der kommunizierenden Röhren). Erreicht der Flüssigkeitsspiegel schließlich die Mündung 82 des Überlaufrohres 8 in den Verbindungskanal 4, so tritt zunächst eine oben auf schwimmende dünne Schicht Öl und im Folgenden Wasser aus dem Überlaufrohr 8 in den Verbindungskanal 4.

Im weiteren wird über das Überlaufrohr 8 immer mehr kondensiertes Wasser durch den Verbindungskanal 4 dem Aufnahmebehälter 11 in dem Mikrowellenraum 1 rückgeführt. Gleichzeitig steigt in dem Aufnahmegefäß 7 der Pegel der leichteren Ölphase in flüssiger Form an. Dies kann mittels der Pegel-Skalierung 71 durch Ablesen quantitativ erfasst werden.

Nach Abschluss des Verfahrens kann mittels des Ablassventils 9 zuerst die untere Wasserphase und in der Folge das kondensierte Öl abgelassen werden.

Alternativ ist auch eine kontinuierliche Ablassvorrichtung von Öl aus dem Aufnahmegefäß 7 durch einen Ablasskanal (nicht gezeigt) realisierbar, der etwa auf Höhe der Skalierung 71 aus dem Aufnahmegefäß 7 führt.

Weiterhin alternativ ist es möglich, das gewonnene Öl durch eine Öffnung, die beispielsweise im Übergangsbereich des Ablasskanals 6 zum Aufnahmegefäß 7 angeordnet ist, von oben her mit einer Pipette abzusaugen.

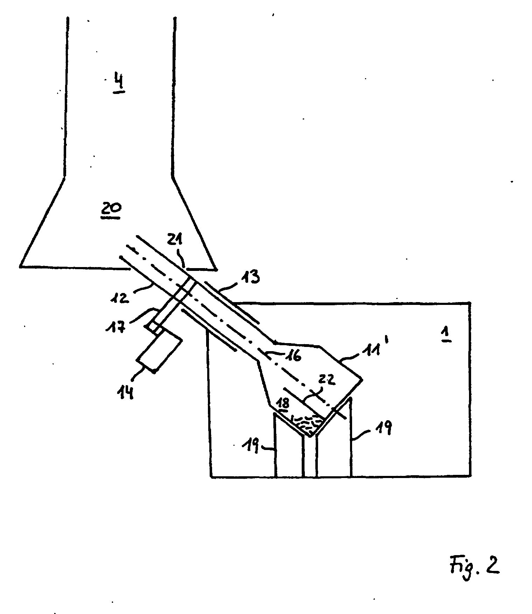

Fig. 2 zeigt schematisch vereinfacht eine alternative Ausgestaltungsmöglichkeit des Aufnahmebehälters 11 im Mikrowellenraum 1. Gemäß dieser Variante ist der Aufnahmebehälter 11' schräg, beispielsweise 45° zur Vertikalen geneigt angeordnet und rotierbar um eine Drehachse 16 gelagert. Eine vergleichbare Vorrichtung ist als solche bereits aus der deutschen Patentanmeldung 102 27 836.9 bekannt, auf die bezüglich der schrägen Lage und der rotierbaren Ausführung des Aufnahmebehälters ausdrücklich Bezug genommen wird.

Wie in Fig. 2 dargestellt ist, der Aufnahmebehälter 11' gemäß dieser Variante einen Hauptteil auf, der sich in dem Mikrowellenraum 1 befindet und ein zylindrisch geformtes Verlängerungsrohr 12, das zur Drehachse 16 symmetrisch angeordnet ist. Das Verlängerungsrohr 12 ragt durch eine Öffnung im Mikrowellenraum 1 hindurch nach außen und ist an dieser Stelle in einem Lager 13 drehbar um die Drehachse 16 gelagert.

Der Hauptteil des Aufnahmebehälters 11' und das Verlängerungsrohr 12 können dabei beispielsweise zweiteilig gestaltet sein, um ein leichtes Beladen zu ermöglichen.

Weiterhin kann eine Halterung 19 vorgesehen sein, beispielsweise zweiteilig gestaltet, so wie in Fig. 2 schematisch angedeutet, um das Hauptteil des Aufnahmebehälters 11' im Mikrowellenraum 1 zu halten.

Wie in Fig. 2 weiterhin angedeutet, ist in dem Hauptteil des Aufnahmebehälters 11' - unsymmetrisch zur Drehachse 16 - durch eine Trennwand 22 ein Bereich 18 zur Aufnahme des biologischen Materials gebildet. Bei Drehung um die Achse 16 durchläuft dieser abgetrennte Bereich 18 somit auf einer kreisförmigen Bahn unterschiedliche Orte innerhalb des Mikrowellenraumes 1. Da in entsprechenden Mikrowellenräumen mit einer inhomogenen Ausprägung des Strahlungsfeldes gerechnet werden muss, vermindert diese unsymmetrische Anordnung die Gefahr einer ungleichförmigen Bestrahlung des Materials.

Zum Antrieb dient ein Elektromotor 14, dessen Kraft über einen Antriebsriemen 17 auf das Verlängerungsrohr 12 und damit auf das Aufnahmegefäß 11' übertragen wird. Die gesamte Antriebsvorrichtung befindet sich insbesondere außerhalb des Mikrowellenraumes 1 und ist daher leicht zugänglich und auch keiner potentiellen Erwärmung durch Mikrowellenbestrahlung ausgesetzt.

Das Verlängerungsrohr 12 ragt gemäß dieser Variante jenseits der Antriebsvorrichtung in einen Dampfaufnahmeraum 20. Dieser hat die Form einer Abzugshaube und übergreift die obere Öffnung des Verlängerungsrohres 12. In seinem unteren Bereich ist der Dampfaufnahmeraum 20 mittels einer Dichtung 21 gegen das Verlängerungsrohr 12 abgedichtet. Falls die Ansprüche an den Reinheitsgrad entsprechend gering sind, kann auf eine Abdichtung zwischen dem Dampfaufnahmeraum 20 und dem Verlängerungsrohr 12 jedoch auch verzichtet werden.

Während des Verfahrens steigt also die dampfhaltige Luft von dem Hauptteil des Aufnahmebehälters 11' konvektionsbedingt durch das Verlängerungsrohr 12 auf und erreicht auf diese Weise den Dampfaufnahmeraum 20.

Nach oben hin geht der Dampfaufnahmeraum 20 direkt in den Verbindungskanal 4 über oder stellt alternativ selbst Teil des Verbindungskanals 4 dar.

Als Beispiel für die Leistungsfähigkeit des Verfahrens sei angeführt, dass es möglich ist, mit der erfindungsgemäßen Vorrichtung pflanzliche Öle aus 1 kg Rosmarin bei Energiezufuhr von etwa 800 bis 1000 Watt über einen Zeitraum von 20 Minuten in einer Menge zu erhalten, für die mit der herkömmlichen Hydrodestillationsmethode etwa 10 Liter Wasser nötig sind, die für circa 4 Stunden beheizt werden müssen.

Die Vorteile der Erfindung lassen sich wie folgt zusammenfassen:
- Es handelt sich um ein lösungsmittelfreies Verfahren, das besonders schonend und effizient ist.
- Das Verfahren kann in einem geschlossenen System durchgeführt werden, so dass der Eintrag unerwünschter Stoffe ausgeschlossen werden kann. Damit kann man höchsten Reinheitsansprüchen - beispielsweise im Zusammenhang mit der Herstellung homöopathischer Produkte
- gerecht werden.
- Die Vorrichtung besteht aus vergleichsweise einfachen Bauteilen, und kann von daher als wirtschaftlich eingestuft werden.
- Im Vergleich zu klassischen Hydrodestillationsverfahren bietet das Verfahren erheblichen Zeitgewinn.

### Bezugszeichenliste

- 1: Mikrowellenraum
- 2: Kondensationsraum
- 3: Kühlmittel
- 4: Verbindungskanal
- 5: Trennwand
- 6: Ablasskanal
- 7: Aufnahmegefäß
- 8: Überlaufrohr
- 9: Ablassventil
- 10: Drehscheibe
- 11: Aufnahmebehälter
- 11': Variante des Aufnahmebehälters gemäß Fig. 2
- 12: Verlängerungsrohr
- 13: Lager
- 14: Elektromotor
- 15: Temperaturmessgerät
- 16: Symmetrieachse
- 17: Antriebsriemen
- 18: abgetrennter Bereich
- 19: Halterung
- 20: Dampfaufnahmeraum
- 21: Dichtung
- 22: Trennwand
- 31: Wasserzuleitung
- 32: Wasserableitung
- 51: Öffnung
- 71: Pegel-Skalierung
- 81: Mündung des Überlaufrohrs in das Aufnahmegefäß
- 82: Mündung des Überlaufrohrs in den Verbindungskanal

## Patentansprüche

1. Verfahren zur Extraktion eines flüchtigen Naturstoffes aus biologischem Material,
wobei das biologische Material Wasser enthält, aufweisend folgende Schritte:
a) Einbringen des biologischen Materials in einen Mikrowellenraum (1) unter Ausschluss von Lösungsmittel,
b) Bestrahlen des biologischen Materials mit Mikrowellen bis zur Freisetzung wenigstens eines Teils des Naturstoffes aus dem biologischen Material,
c) Abtransport des freigesetzten Naturstoffes durch Konvektion aus dem Mikrowellenraum (1) in einen Kondensationsraum (2),
d) Kühlung des freigesetzten Naturstoffes bis zur Kondensation, und
e) Abtransport des freigesetzten Naturstoffes aus dem Kondensationsraum (2).

2. Verfahren nach Anspruch 1,
**dadurch gekennzeichnet,**
**dass** der Mikrowellenraum (1) und der Kondensationsraum (2) Teile eines geschlossenen Systems sind.

3. Verfahren nach Anspruch 1 oder 2,
**dadurch gekennzeichnet,**
**dass** der Naturstoff ein pflanzliches Öl ist.

4. Verfahren nach einem der Ansprüche 1 bis 3,
**dadurch gekennzeichnet,**
**dass** bei Schritt b) die Mikrowellenstrahlung derart geregelt wird, dass in dem Mikrowellenraum (1) eine Temperatur unter 100°C, vorzugsweise eine Temperatur von circa 80 bis 90°C erreicht wird.

5. Verfahren nach einem der Ansprüche 1 bis 4,
**dadurch gekennzeichnet,**
**dass** bei Schritt b) das biologische Material zur Expositionsverbesserung gerührt wird.

6. Verfahren nach einem der Ansprüche 1 bis 5,
**dadurch gekennzeichnet,**
**dass** der Mikrowellenraum einen schräg angeordneten, rotierbaren Aufnahmebehälter (11) zur Expositionsverbesserung des biologischen Materials aufweist.

7. Verfahren nach einem der Ansprüche 1 bis 6,
**dadurch gekennzeichnet,**
**dass** der Kondensationsraum (2) von dem Mikrowellenraum (1) durch eine Trennwand (5) abgetrennt ist, die eine sich nach oben verjüngende Form aufweist und im oberen Bereich eine luftdurchlässige Öffnung (51) aufweist.

8. Verfahren nach Anspruch 7,
**dadurch gekennzeichnet,**
**dass** die Trennwand (5) aus Kunststoff oder Glas gefertigt ist.

9. Verfahren nach einem der Ansprüche 1 bis 8,
**dadurch gekennzeichnet,**
**dass** in einem Übergangsbereich zwischen dem Mikrowellenraum (1) und dem Kondensationsraum (2) Wärme zugeführt wird, um die Konvektion zu unterstützen.

10. Verfahren nach einem der Ansprüche 1 bis 9,
**dadurch gekennzeichnet,**
**dass** der Kondensationsraum (2) im Wandbereich gekühlt wird.

11. Verfahren nach einem der Ansprüche 1 bis 10,
**dadurch gekennzeichnet,**
**dass** der Kondensationsraum (2) durch eine Wasserkühlung gekühlt wird.

12. Verfahren nach einem der Ansprüche 1 bis 11,
**dadurch gekennzeichnet,**
**dass** der Kondensationsraum (2) die Form eines vertikal orientierten Zylinders aufweist.

13. Verfahren nach einem der Ansprüche 1 bis 12,
**dadurch gekennzeichnet,**
**dass** der kondensierte Naturstoff bei Schritt e) unter Nutzung der Schwerkraft aus dem Kondensationsraum (2) abgeleitet wird.

14. Verfahren nach einem der Ansprüche 1 bis 13,
**dadurch gekennzeichnet,**
**dass** bei Schritt e) zusammen mit dem Naturstoff abgeleitetes Wasser dem Mikrowellenraum (1) zugeführt wird.

15. Verfahren nach Anspruch 14,
**dadurch gekennzeichnet,**
**dass** das abgeleitete Wasser wenigstens teilweise durch eine Überlaufvorrichtung (7, 8) von dem Naturstoff getrennt und dem Mikrowellenraum (1) zugeführt wird.

16. Vorrichtung zur Extraktion eines flüchtigen Naturstoffes aus biologischem Material, aufweisend:
- einen Mikrowellenofen mit einem Mikrowellenraum (1) zur Aufnahme des biologischen Materials, und
- einen Kondensationsraum (2), wobei der Kondensationsraum (2) oberhalb des Mikrowellenraumes (1) angeordnet ist, und durch einen Verbindungskanal (4) mit dem Mikrowellenraum (1) verbunden ist.

17. Vorrichtung nach Anspruch 16,
**dadurch gekennzeichnet,**
**dass** der Mikrowellenraum (1) und der Kondensationsraum (2) Teile eines geschlossenen Systems bilden.

18. Vorrichtung nach Anspruch 16 oder 17,
**dadurch gekennzeichnet,**
**dass** für den Mikrowellenraum (1) Rührmittel zur Durchmischung von eingebrachtem biologischen Material vorgesehen sind.

19. Vorrichtung nach einem der Ansprüche 16 bis 18,
**dadurch gekennzeichnet,**
**dass** der Mikrowellenraum (1) einen schräg angeordneten, rotierbaren Aufnahmebehälter (11) für biologisches Material aufweist.

20. Vorrichtung nach einem der Ansprüche 16 bis 19,
**dadurch gekennzeichnet,**
**dass** der Kondensationsraum (2) von dem Mikrowellenraum (1) durch eine Trennwand (5) abgetrennt ist, die eine sich nach oben hin verjüngende Form aufweist und im oberen Bereich eine luftdurchlässige Öffnung (51) aufweist.

21. Vorrichtung nach Anspruch 20,
**dadurch gekennzeichnet,**
**dass** die Trennwand (5) aus Kunststoff oder Glas gefertigt ist.

22. Vorrichtung nach einem der Ansprüche 16 bis 21,
**dadurch gekennzeichnet,**
**dass** der Kondensationsraum (2) die Form eines vertikal orientierten Zylinders aufweist.

23. Vorrichtung nach einem der Ansprüche 16 bis 22,
**dadurch gekennzeichnet,**
**dass** der Verbindungskanal (4) die Form eines vertikal orientierten Zylinders aufweist.

24. Vorrichtung nach einem der Ansprüche 16 bis 23,
**dadurch gekennzeichnet,**
**dass** der Verbindungskanal (4) Heizmittel, beispielsweise eine elektrische Heizung aufweist.

25. Vorrichtung nach einem der Ansprüche 16 bis 24,
**dadurch gekennzeichnet,**
**dass** der Kondensationsraum (2) Kühlmittel aufweist.

26. Vorrichtung nach einem der Ansprüche 16 bis 25,
**dadurch gekennzeichnet,**
**dass** der Kondensationsraum (2) eine Wasserkühlung aufweist.

27. Vorrichtung nach einem der Ansprüche 16 bis 26,
**dadurch gekennzeichnet,**
**dass** der Kondensationsraum (2) in seinem Bodenbereich einen Ablass (6) zum Abtransport von kondensiertem Naturstoff aufweist.

28. Vorrichtung nach Anspruch 27,
**dadurch gekennzeichnet,**
**dass** der Ablass (6) mit einem Aufnahmegefäß (7) zur Aufnahme von kondensiertem Naturstoff verbunden ist.

29. Vorrichtung nach Anspruch 27 oder 28,
**dadurch gekennzeichnet,**
**dass** der Ablass (6) mit einer Überlaufvorrichtung (7, 8) zum Trennen von Naturstoff und Wasser verbunden ist.

30. Vorrichtung nach Anspruch 29,
**dadurch gekennzeichnet,**
**dass** die Überlaufvorrichtung (7, 8) mit dem Verbindungskanal (4) derart verbunden ist, dass überlaufendes Wasser durch Schwerkraft in den Mikrowellenraum (1) fließen kann.

## Claims

1. Method for extracting a volatile natural substance from biological material, wherein that the biological material contains water, comprising the following steps:
a) introducing the biological material into a microwave chamber (1) with exclusion of solvent,
b) irradiating the biological material with microwaves until at least some of the natural substance is released from the biological material,
c) conveying the released natural substance from the microwave chamber (1) into a condensation chamber (2) by convection,
d) cooling the released natural substance until it condenses, and
e) conveying the released natural substance from the condensation chamber (2).

2. Method according to Claim 1, **characterised in that** the microwave chamber (1) and the condensation chamber (2) are parts of a closed system.

3. Method according to Claim 1 or 2, **characterised in that** the natural substance is a plant oil.

4. Method according to any one of Claims 1 to 3,
**characterised in that** in step b) the microwave irradiation is controlled in such a way that a temperature below 100°C, preferably a temperature of about 80 to 90°C prevails in the microwave chamber (1).

5. Method according to any one of Claims 1 to 4,
**characterised in that** in step b) the biological material is stirred for improved exposure.

6. Method according to any one of Claims 1 to 5,
**characterised in that** the microwave chamber has an obliquely arranged, rotatable receiving container (11) for improved exposure of the biological material.

7. Method according to any one of Claims 1 to 6,
**characterised in that** the condensation chamber (2) is separated from the microwave chamber (1) by a partition (5) which has an upwardly tapering form and has an air-permeable aperture (51) in the upper region.

8. Method according to Claim 7, **characterised in that** the partition (5) is made from plastics material or glass.

9. Method according to any one of Claims 1 to 8,
**characterised in that** heat is fed in a transition region between the microwave chamber (1) and the condensation chamber (2) to assist convection.

10. Method according to any one of Claims 1 to 9,
**characterised in that** the condensation chamber (2) is cooled in the wall region.

11. Method according to any one of Claims 1 to 10,
**characterised in that** the condensation chamber (2) is cooled by water cooling.

12. Method according to any one of Claims 1 to 11,
**characterised in that** the condensation chamber (2) has the form of a vertically oriented cylinder.

13. Method according to any one of Claims 1 to 12,
**characterised in that** the condensed natural substance is discharged from the condensation chamber (2) in step e) using gravitational force.

14. Method according to any one of Claims 1 to 13,
**characterised in that** in step (e) water discharged together with the natural substance is fed to the microwave chamber (1).

15. Method according to Claim 14, **characterised in that** the discharged water is at least partially separated from the natural substance by an overflow device (7, 8) and is fed to the microwave chamber (1).

16. Device for extracting a volatile natural substance from biological material, comprising:
- a microwave oven with a microwave chamber (1) for receiving the biological material, and
- a condensation chamber (2), wherein the condensation chamber (2) is arranged above the microwave chamber (1), and is connected to the microwave chamber (1) by a connecting channel (4).

17. Device according to Claim 16, **characterised in that** the microwave chamber (1) and the condensation chamber (2) form parts of a closed system.

18. Device according to Claims 16 or 17, **characterised in that** stirring means are provided for the microwave chamber (1) for thorough mixing of introduced biological material.

19. Device according to any one of Claims 16 to 18, **characterised in that** the microwave chamber (1) has an obliquely arranged rotatable receiving container (11) for biological material.

20. Device according to any one of Claims 16 to 19, **characterised in that** the condensation chamber (2) is separated from the microwave chamber (1) by a partition (5) which has an upwardly tapering form and has an air-permeable aperture (51) in the upper region.

21. Device according to Claim 20, **characterised in that** the partition (5) is made from plastics material or glass.

22. Device according to any one of Claims 16 to 21, **characterised in that** the condensation chamber (2) has the form of a vertically oriented cylinder.

23. Device according to any one of Claims 16 to 22, **characterised in that** the connecting channel (4) has the form of a vertically oriented cylinder.

24. Device according to any one of Claims 16 to 23, **characterised in that** the connecting channel (4) has heating means, for example electric heating.

25. Device according to any one of Claims 16 to 24, **characterised in that** the condensation chamber (2) has cooling means.

26. Device according to any one of Claims 16 to 25, **characterised in that** the condensation chamber (2) has water cooling.

27. Device according to any one of Claims 16 to 26, **characterised in that** the condensation chamber (2) in its base region has an outlet (6) for conveying away condensed natural substance.

28. Device according to Claim 27, **characterised in that** the outlet (6) is connected to a receiving vessel (7) for receiving condensed natural substance.

29. Device according to Claim 27 or 28, **characterised in that** the outlet (6) is connected to an overflow device (7, 8) for separating natural substance and water.

30. Device according to Claim 29, **characterised in that** the overflow device (7, 8) is connected to the connecting channel (4) in such a way that overflowing water can flow into the microwave chamber (1) owing to gravitational force.

## Revendications

1. Procédé d'extraction d'une substance naturelle volatile d'une matière biologique, la matière biologique contenant de l'eau, lequel procédé comporte les étapes suivantes consistant à :
a) introduire la matière biologique dans une chambre à micro-ondes (1) à l'exclusion de solvant,
b) irradier la matière biologique avec des micro-ondes jusqu'à libérer au moins une partie de la substance naturelle de la matière biologique,
c) évacuer la substance naturelle libérée par convection de la chambre à micro-ondes (1) et l'amener dans une chambre de condensation (2),
d) refroidir la substance naturelle libérée jusqu'à la condensation, et
e) évacuer la substance naturelle libérée de la chambre de condensation (2).

2. Procédé selon la revendication 1, **caractérisé en ce que** la chambre à micro-ondes (1) et la chambre de condensation (2) font partie d'un système fermé.

3. Procédé selon la revendication 1 ou 2, **caractérisé en ce que** la substance naturelle est une huile végétale.

4. Procédé selon l'une des revendications 1 à 3, **caractérisé en ce qu'**à l'étape b) le rayonnement micro-onde est régulé de façon à obtenir une température inférieure à 100°C, avantageusement une température d'environ 80 à 90°C, dans la chambre à micro-ondes (1).

5. Procédé selon l'une des revendications 1 à 4, **caractérisée en ce qu'**à l'étape b) la matière biologique est agitée en vue d'améliorer l'exposition.

6. Procédé selon l'une des revendications 1 à 5, **caractérisé en ce que** la chambre à micro-ondes comporte un récipient rotatif et incliné (11) destiné à améliorer l'exposition de la matière biologique.

7. Procédé selon l'une des revendications 1 à 6, **caractérisé en ce que** la chambre de condensation (2) est séparée de la chambre à micro-ondes (1) par une paroi de séparation (5) qui a une forme s'amincissant vers le haut et qui comporte dans la région supérieure une ouverture de passage d'air (51).

8. Procédé selon la revendication 7, **caractérisé en ce que** la paroi de séparation (5) est en matière plastique ou en verre.

9. Procédé selon l'une des revendications 1 à 8, **caractérisé en ce que** de la chaleur est amenée dans une région de transition entre la chambre à micro-ondes
(1) et la chambre de condensation (2) afin de favoriser la convection.

10. Procédé selon l'une des revendications 1 à 9, **caractérisé en ce que** la chambre de condensation (2) est refroidie au niveau des parois.

11. Procédé selon l'une des revendications 1 à 10, **caractérisé en ce que** la chambre de condensation (2) est refroidie par un dispositif de refroidissement hydraulique.

12. Procédé selon l'une des revendications 1 à 11, **caractérisé en ce que** la chambre de condensation (2) a la forme d'un cylindre orienté verticalement.

13. Procédé selon l'une des revendications 1 à 12, **caractérisé en ce qu'**à l'étape e) la substance naturelle condensée est évacuée de la chambre de condensation (2) par gravité.

14. Procédé selon l'une des revendications 1 à 13, **caractérisé en ce qu'**à l'étape e) de l'eau évacuée conjointement avec la substance naturelle est amenée à la chambre à micro-ondes (1).

15. Procédé selon la revendication 14, **caractérisé en ce que** l'eau évacuée est séparée au moins partiellement de la substance naturelle par un dispositif de débordement (7, 8) et est amenée à la chambre à micro-ondes (1).

16. Dispositif d'extraction d'une substance naturelle volatile d'une matière biologique, lequel dispositif comprend :
- un four à micro-ondes comportant une chambre à micro-ondes (1) destinée à recevoir la matière biologique, et
- une chambre de condensation (2), la chambre de condensation (2) étant située au-dessus de la chambre à micro-ondes (1) et étant reliée à la chambre à micro-ondes (1) par un canal de liaison (4).

17. Dispositif selon la revendication 16, **caractérisé en ce que** la chambre à micro-ondes (1) et la chambre de condensation (2) font partie d'un système fermé.

18. Dispositif selon la revendication 16 ou 17, **caractérisé en ce qu'**il est prévu pour la chambre à micro-ondes (1) des moyens d'agitation destinés à mélanger la matière biologique introduite.

19. Dispositif selon l'une des revendications 16 à 18, **caractérisé en ce que** la chambre à micro-ondes (1) comporte un récipient rotatif et incliné (11) destiné à la matière biologique.

20. Dispositif selon l'une des revendications 16 à 19, **caractérisé en ce que** la chambre de condensation (2) est séparée de la chambre à micro-ondes (1) par une paroi de séparation (5) qui a une forme s'amincissant vers le haut et qui comporte dans la région supérieure une ouverture de passage d'air (51).

21. Dispositif selon la revendication 20, **caractérisé en ce que** ta paroi de séparation (5) est en matière plastique ou en verre.

22. Dispositif selon l'une des revendications 16 à 21, **caractérisé en ce que** la chambre de condensation (2) a la forme d'un cylindre orienté verticalement.

23. Dispositif selon l'une des revendications 16 à 22, **caractérisé en ce que** le canal de liaison (4) a la forme d'un cylindre orienté verticalement.

24. Dispositif selon l'une des revendications 16 à 23, **caractérisé en ce que** le canal de liaison (4) comporte des moyens de chauffage, par exemple un dispositif de chauffage électrique.

25. Dispositif selon l'une des revendications 16 à 24, **caractérisé en ce que** la chambre de condensation (2) comporte des moyens de refroidissement.

26. Dispositif selon l'une des revendications 16 à 25, **caractérisé en ce que** la chambre de condensation (2) comporte un dispositif de refroidissement hydraulique.

27. Dispositif selon l'une des revendications 16 à 26, **caractérisé en ce que** la chambre de condensation (2) comporte dans sa région inférieure une évacuation (6) destinée à évacuer la substance naturelle condensée.

28. Dispositif selon la revendication 27, **caractérisé en ce que** l'évacuation (6) est reliée à un récipient (7) destiné à recevoir la substance naturelle condensée.

29. Dispositif selon la revendication 27 ou 28, **caractérisé en ce que** l'évacuation (6) est reliée à un dispositif de débordement (7, 8) destiné à séparer la substance naturelle et l'eau.

30. Dispositif selon la revendication 29, **caractérisé en ce que** le dispositif de débordement (7, 8) est relié au canal de liaison (4) de sorte que l'eau qui déborde peut s'écouler par gravité dans la chambre à micro-ondes (1).
